# EUROPÄISCHE PATENTSCHRIFT

(11) **EP 1 098 926 B1**
(45) Veröffentlichungstag und Bekanntmachung des Hinweises auf die Patenterteilung: **03.03.2004**
(21) Anmeldenummer: 99932732.3
(22) Anmeldetag: 25.06.1999
(51) Int. Cl.: C08G 77/50, C09D 183/14

(54) **VERNETZBARE HYPERVERZWEIGTE POLYMERE, EIN VERFAHREN ZU DEREN HERSTELLUNG UND DEREN VERWENDUNG**
CROSS-LINKABLE HYPERBRANCHED POLYMERS, METHOD FOR THE PRODUCTION AND USE OF THE SAME
POLYMERES HYPERRAMIFIES RETICULABLES, PROCEDE POUR LEUR PREPARATION ET UTILISATION DESDITS POLYMERES

(30) Priorität: 07.07.1998 DE 19830266
(43) Veröffentlichungstag der Anmeldung: 16.05.2001
(73) Patentinhaber: Bayer MaterialScience AG, 51368 Leverkusen (DE)
(72) Erfinder: KIRCHMEYER, Stephan, D-51375 Leverkusen (DE); EVERSHEIM, Hubertus, D-42929 Wermelskirchen (DE); MECHTEL, Markus, D-50937 Köln (DE); MAGER, Michael, D-51375 Leverkusen (DE); KRAUS, Harald, D-51375 Leverkusen (DE)
(86) Internationale Anmeldenummer: PCT/EP1999/004428
(87) Internationale Veröffentlichungsnummer: WO 2000/002954

(56) Entgegenhaltungen:
- EP-A- 0 694 573
- EP-A- 0 829 518
- XP002121635

## Beschreibung

Die Erfindung betrifft hyperverzweigte vernetzbare Polymere, ein Verfahren zu ihrer Herstellung und ihre Verwendung als Beschichtungs- und Bindemittel.

Die Eigenschaften von Lackbindemitteln werden neben ihrem chemischen Aufbau entscheidend durch Vernetzungsdichte und die Anordnung der Vernetzungsstellen im Netzwerk beeinflusst. Bei Silikon-Polymeren werden vernetzungsfähige Polymere dadurch erzeugt, dass man an den Kettenenden und entlang der Polymerkette vemetzungsfähige Gruppen, z.B. Si-H-Gruppen oder Alkoxygruppen anbringt. Daneben ist es weiterhin möglich, durch Zusatz verzweigender Silikonbausteine Verzweigungsstellen in die Polymere einzubauen, die nach Endvemetzung als Vernetzungsstellen wirken. Durch die den Polymeraufbau bestimmenden Reaktionsmechanismen ist es jedoch ausschließlich möglich, Vernetzungsstellen in unregelmäßiger, den Gesetzen der Statistik gehorchender Weise in die Polymere einzubringen. Zudem neigen Silikone stark zur Bildung von cyclischen Verbindungen. Diese bei üblichen Silikonen immer auftretende Ringbildung reduziert die wirksamen Vernetzungsstellen und verschlechtert daher die lacktechnischen Eigenschaften.

Hyperverzweigte Polymere sind Polymere mit einer besonderen Polymerstruktur, die durch die Struktur der eingesetzten Monomeren vorgegeben ist. Als Monomere werden sogenannte ABₙ-Monomere eingesetzt, d.h. Monomere, die zwei verschiedene Funktionalitäten A und B tragen. Von diesen ist eine Funktionalität (A) pro Molekül nur einmal, die andere Funktionalität (B) mehrfach vorhanden. Die beiden Funktionalitäten A und B können miteinander unter Bildung einer chemischen Bindung umgesetzt, d.h. polymerisiert werden. Aufgrund der Monomerstruktur entstehen bei der Polymerisation regelmäßig verzweigte Polymere mit einer baumartigen Struktur, sogenannte hyperverzweigte Polymere. Hyperverzweigte Polymere weisen eine regelmäßige Verzweigungsstelle, keine Ringe und praktisch ausschließlich B-Funktionalitäten an den Kettenenden auf. Zum Aufbau von hyperverzweigten Silikon-Polymeren können als Funktionalitäten Siliciumhydrid-Gruppen und Gruppen mit Kohlenstoff-Kohlenstoff-Mehrfachbindungen verwendet werden. Diese reagieren unter Zusatz von z.B. Platin-Katalysatoren und Bildung von Silicium-Kohlenstoff-Bindungen. Hyperverzweigte Polymere auf der Basis von Silikonen sind z.B. aus z.B. Adv. Dendritic Macromol. (1995), 2, 101-121 bekannt. Die B-Funktionalitäten können nach Beendigung der Reaktion endfunktionalisiert werden. In Polym. Prepr. (Am. Chem. Soc., Div. Polym. Chem.) (1991), 32(3), 633-4 wurden z.B. die an den Kettenenden befindlichen Si-H-Gruppen durch Umsetzung mit Olefinen in Kohlenwasserstoffketten umgewandelt. Derartige Polymere sind jedoch als Lackbindemittel ungeeignet, da sie keine vernetzungsfähigen Gruppen tragen und somit nicht aushärten.

Die Aufgabe der Erfindung bestand darin, hyperverzweigte Polymere zur Verfügung zu stellen, die sich vernetzen lassen und daher als Lackbindemittel geeignet sind.

Es wurde nun gefunden, dass die vorgenannte Aufgabe mit Hilfe der erfindungsgemäßen vernetzbaren hyperverzweigten Polymeren gelöst werden kann. Die Polymeren weisen baumartige, regelmäßig verzweigte Strukturen von hyperverzweigten Polymeren auf und tragen zudem vernetzbare Gruppen.

Gegenstand der Erfindung sind daher vernetzbare hyperverzweigte Polymere erhältlich durch Umsetzung von
a) mindestens einer Verbindung, die als funktionelle Gruppen
   Aₘ und Bₙ enthält,
   wobei
   - A: ein H-Si(R¹) 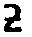 -haltiger Rest,
   in welchem
   R¹ Kohlenwasserstoffrest mit 1 bis 8 Kohlenstoffatomen,
   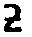 = 3-v ist,
   B ein -CR'=CHR-Gruppen oder Kohlenstoff-Kohlenstoff-Dreifachbindung enthaltender Si(R¹)y Rest, mit
   y = 3-v,
   R, R' Wasserstoff oder einen 1 bis 15 Kohlenstoffatome enthaltenden Kohlenwasserstoffrest und
   m + n kleiner gleich 7 und
   n, m eine ganze Zahl von 1 bis 6 und im Mittel 1,5 bis 6, mit der Maßgabe,
   dass immer einer der Indizes m oder n gleich 1 ist und der andere Index vorzugsweise größer gleich 2 ist
   mit
b1) im Fall von m = 1
   mindestens einer Verbindung der allgemeinen Formel

   AXᵥ,

   in der
   A ein H-Si(R¹) 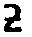 -haltiger Rest,
   in welchem
   R¹ Kohlenwasserstoffrest mit 1 bis 8 Kohlenstoffatomen,
   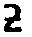 = 3-v ist,
   X eine an Silizium gebundene hydrolysierbare Gruppe oder eine Si-OH-Gruppe und
   v eine ganze Zahl von 1 bis 3 bedeuten, oder
b2) im Fall von n = 1
   mindestens einer Verbindung der Formel

   BX_{w}

   mit
   - B: ein -CR'=CHR-Gruppen oder Kohlenstoff-Kohlenstoff-Dreifachbindungen enthaltender Si(R¹)_{y} Rest, mit
   - R¹: Kohlenwasserstoffrest mit 1 bis 8 Kohlenwasserstoffatomen,
   - y =: 3-v,
   - R, R': Wasserstoff oder einen 1 bis 15 Kohlenstoffatome enthaltenden Kohlenwasserstoffrest und
   - X: eine an Silizium gebundene hydrolysierbare Gruppe oder eine Si-OH-Gruppe und
   - w: eine ganze Zahl von 1 bis 3,
bei Temperaturen >0°C, gegebenenfalls in Gegenwart eines Katalysators.

Bei den vemetzbaren, hyperverzweigten Polymeren handelt es sich vorzugsweise um Polymere mit einem Molekulargewicht (Mn) von 1 000 bis 5 000 000.

Als Verbindungen, die als funktionelle Gruppen Aₘ und Bₙ enthalten, kommen im Fall von m = 1 grundsätzlich sämtliche Verbindungen in Frage, die eine H-Si-Bindung und mehrere C=CH- oder -CR'=CH-R-Gruppen oder -C=C-R-Gruppen tragen. Es handelt sich daher vorzugsweise um Verbindungen die einen eine H-Si-Bindung enthaltenden Rest und im Mittel 1,5 bis 6 Reste, die -CH=CH-Gruppen oder -C≡C-R-Gruppen tragen.

Verbindungen, die eine H-Si-Bindung und nur eine Kohlenstoff-Kohlenstoff-Doppelbindung enthaltende Gruppe oder eine -C≡C-R-Gruppe tragen, können gegebenenfalls mitverwendet werden.

Als Verbindungen a) sind im Fall von m >1 sind grundsätzlich alle Verbindungen geeignet, die mehrere H-Si-Bindungen und eine R'C=CHR-Gruppe oder eine Kohlenstoff-Kohlenstoff-Dreifachbindung enthaltende Gruppe tragen. Verbindungen der allgemeinen Formel (III) sind daher Verbindungen die 1 bis 6 und im Mittel 1,5 bis 6 H-Si-Bindungen enthaltende Reste und eine Kohlenstoff-Kohlenstoff-Doppelbindung enthaltende Gruppe oder eine Kohlenstoff-Kohlenstoff-Dreifachbindung enthaltende Gruppe tragen. Verbindungen, die eine H-Si-Bindung und nur eine Kohlenstoff-Kohlenstoff-Doppelbindung enthaltende Gruppe oder eine Kohlenstoff-Kohlenstoff-Dreifachbindung enthaltende Gruppe tragen, können gegebenenfalls mitverwendet werden.

In einer bevorzugten Ausführungsform der Erfindung ist im Fall von n = 1 die Verbindung a) vorzugsweise

R³-SiR¹ _{f}(O-SiHR⁴ ₂)_{3-f}

R³-SiR¹ _{f}(O-SiH₂R⁴)_{3-f}

und/oder

R³-SiR¹ _{f}H_{3-f} ,

wobei
- R³: eine -CR'=CH-R-Gruppe oder eine Kohlenstoff-Kohlenstoff-Dreifachbindung enthaltende Gruppe,
- R¹: Kohlenwasserstoffrest mit 1 bis 8 Kohlenstoffatomen,
- f: eine ganze Zahl von 0 bis 2 und
- R⁴: C₁-C₈-Alkyl oder Phenyl bedeuten.

Verwendet werden können beispielsweise Siloxane wie 3-Tris-(dimethylsiloxy)-silyl-propylmethacrylat, 1,1,3,5,5-Pentamethyl-3-allyl-trisiloxan, 2-Allyl-2-dimethyloxysilyloxy-1,1,3,3-tetramethyl-trisiloxan und 2-Vinyl-2-dimethyloxysilyloxy-1,1,3,3-tetramethyl-trisiloxan.

Bevorzugt ist die Verbindung a) im Fall von m = 1 mindestens eine Verbindung der Formel (I)

H-SiR¹ ₐ[(Oₓ -(CH₂)_{b} R'C=CH-R]_{c} (I),

wobei
- R¹: Kohlenwasserstoffrest mit 1 bis 8 Kohlenstoffatomen,
- R, R': Wasserstoff oder einen 1 bis 15 Kohlenstoffatome enthaltenden Kohlenwasserstoffrest und
- a: 0 oder 1,
- b: eine ganze Zahl von 1 bis 6 und
- c =: 3-a und
- x: 0 oder 1 ist.

Verbindungen der Formel (I) sind beispielsweise Allylsilane wie z.B. Methyldiallylsilan, Ethyldiallylsilan, Propyldiallylsilan, Butyldiallylsilan, Pentyldiallylsilan, Hexyldiallylsilan und Triallylsilan, Vinylsilane wie z.B. Methyldivinylsilan, Ethyldivinylsilan, Propyldivinylsilan, Butyldivinylsilan, Pentyldivinylsilan, Hexyldivinylsilan und Trivinylsilan, weitere ungesättigte Gruppen tragende Silane z.B. Methyl-bis-(2-methylallyl)-silan, Ethyl-bis-(2-methyl-allyl)-silan oder Propyl-bis-(2-methyl-allyl)-silan, Allylmethyl(2-methyl-pent-4-enyl)-silan, Bis-(2-methyl-allyl)-propylsilan und Methyl-bis-(2-methyl-pent-4-enyl)-silan.

Mitverwendet werden können 3-Methylallylsilan, 3-Butenylsilan, Methylvinylsilan, Ethylvinylsilan, Propylvinylsilan, Phenylvinylsilan, Methylallylsilan, Ethylallylsilan, Propylallylsilan, Phenylallylsilan.

Als Verbindungen der allgemeinen Formel a) sind im Fall von m = 1 ebenfalls ein oder mehrere Verbindungen der Formel (II) bevorzugt:

H-SiR¹ ₐ[(Oₓ -(CH₂)_{b} C≡C-R]_{c} (II),

in der
- R: Wasserstoff oder einen 1 bis 15 Kohlenstoffatome enthaltenden Kohlenwasserstoffrest,
- R¹: Kohlenwasserstoffrest mit 1 bis 8 Kohlenstoffatomen,
- a: 0 oder 1,
- b: eine ganze Zahl von 1 bis 6 und
- c =: 3-a und
- x: 0 oder 1 ist.

Beispiele für Verbindungen der allgemeinen Formel (II) sind Silane wie z.B. Ethinyldivinylsilan und Dibut-3-en-1-inyl-methyl-silan, Methyldiallyloxysilan, Ethyldiallyloxysilan, Tris-(2-methylvinyloxy)-silan und Trisallyloxysilan.

Gegebenenfalls können Verbindungen der Formel (I) und/oder (II) auch gemeinsam eingesetzt werden oder auch diese einzeln oder gemeinsam zusammen mit Silanen mit einer H-Si-Bindung und einer Kohlenstoff-Kohlenstoff-Doppelbindung enthaltenden Gruppe oder -C≡C-R-Gruppe.

Als Verbindungen der allgemeinen Formel AXᵥ im Fall von m = 1 können grundsätzlich alle Verbindungen verwendet werden, die eine H-Si-Bindung und eine oder mehrere an Silizium gebundene hydrolysierbare Gruppe oder Si-OH-Gruppe enthalten.

Im Fall von m = 1 ist AXᵥ vorzugsweise mindestens eine Verbindung der Formel (III)

H-SiR¹ _{d}Yₑ (III),

in der
- R¹: Kohlenwasserstoffrest mit 1 bis 8 Kohlenstoffatomen,
- d: eine ganze Zahl von 0 bis 2,
- Y: Cl, Br oder OR², wobei
R² eine Alkyl- oder Acylgruppe mit 1 bis 8 Kohlenstoffatomen ist, und
- e =: 3-d bedeutet.

Verwendet werden können daher beispielsweise Trialkoxysilane wie Trimethoxysilan, Triethoxysilan, Tripropoxysilan, Tributoxysilan, Alkylalkoxysilane wie Methyldimethoxydiethoxysilan, Ethyldiethoxysilan, Propyldiethoxysilan, Butyldiethoxysilan, Methyldipropoxysilan, Ethyldipropoxysilan, Propyldipropoxysilan, Butyldipropoxysilan, aber auch Methylbis(chloroethoxy)silan, Ethylbis(chloroethoxy)silan, Methylbis(chloropropoxy)silan, Ethylbis(chloropropoxy)-silan, Silylhalogenide wie Chloromethylsilan, Chlorodiethylsilan, Chlorodipropylsilan, Chlorodibutylsilan, Methylethylchlorosilan, Methylpropylchlorosilan, Methylbutylchlorosilan, Ethylpropylchlorosilan, Ethylbutylchlorosilan, Dichloromethylsilan, Dichloroethylsilan, Dichloropropylsilan, Dichlorobutylsilan, Dichlorooctylsilan, Bromodimethylsilan, Bromodiethylsilan, Bromodipropylsilan, Bromodibutylsilan, Methylethylchlorosilan, Dibromomethylsilan, Dibromoethylsilan, Dibromopropylsilan, Dibromobutylsilan, Methyl-(2-methyl-3-chlor-propyl)-chlorosilan, Chlorethyldichlorosilan, Dichloro-1,1,1-trifluorpropylsilan und Chloro-methyl-1,1,1-trifluorpropylsilan und Acylsilane wie Diacetoxymethylsilan, Diacetoxyethylsilan, Diacetoxypropylsilan, Diacetoxybutylsilan, Methylsilyldipropionat, Butylsilyldipropionat, Dimethylsilylacetat, Dimethylsilylpropionat, Diethylsilylacetat, Methylbutylsilylacetat.

Im Fall von n = 1 sind grundsätzlich alle Verbindungen einsetzbar, die eine CR'=CHR-Gruppe oder C≡C-R-Gruppe und mindestens eine Si-OH- oder eine hydrolysierbare Gruppe tragen.

Die Verbindung BX_{w} ist vorzugsweise mindestens eine Verbindung der allgemeinen Formel (IV)

R³-SiR¹ _{d}Yₑ (IV)

wobei
- R¹: Kohlenwasserstoffrest mit 1 bis 8 Kohlenstoffatomen,
- R³: eine -CR'=CH-R-Gruppe oder eine Kohlenstoff-Kohlenstoff-Dreifachbindung enthaltende Gruppe,
- d: eine ganze Zahl von 0 bis 2,
- Y: Cl, Br oder OR², wobei
R² eine Alkyl- oder Acylgruppe mit 1 bis 8 Kohlenstoffatomen ist und
- e =: 3-d ist.

Verwendet werden können beispielsweise Alkoxysilane wie Vinyltrimethoxysilan, Vinyltri(methoxyethyl)silan, Vinyltriethoxysilan, Allyltrimethoxysilan, Allyltriethoxysilan, Allyltri(methoxyethyl)silan, Hex-1-en-6-yl-trimethoxysilan, Hex-1-en-6-yl-methyldimethoxysilan, Silylhalogenide wie Vinyltrichlorsilan, Allyltrichlorsilan, Vinylmethyldichlorsilan, Allylmethyltrichlorsilan, Vinyltribromsilan, Allyltribromsilan, Vinylmethyldibromsilan und Allylmethyltribromsilan.

Die Mengenverhältnisse der Komponenten a), b1) und b2) werden vorzugsweise so gewählt, dass im Fall von m = 1 die Summe der Si-H-Bindungen in der Komponente AXᵥ (b1)) größer ist als die Summe der Doppelbindungen und C-C-Dreifachbindungen in der Komponente (a)) und im Fall von n = 1 die Summe der Doppelbindungen und C-C-Dreifachbindungen in der Komponente BX_{w} (b2)) größer ist als die Summe der Si-H- Bindungen in der Komponente a) für n = 1.

Die Reaktionstemperatur liegt vorzugsweise im Bereich von 0 bis 150°C, besonders bevorzugt bei Temperaturen von 20 bis 100°C.

Katalysatoren im Sinne der Erfindung sind vorzugsweise Platin- und Rhodiumverbindungen.

Beispiele solcher Verbindungen sind Metalle wie Platin(O) in fein verteilter Form, Säuren wie Hexachloroplatinsäure, Salze wie Platintetrachlorid und Komplexe wie Pt(NH₃)₂Cl₂ und Platinkomplexe mit vinylsiloxanhaltigen Liganden.

Diese Katalysatoren werden vorzugsweise in einer Menge von 5 bis 100 ppm, besonders bevorzugt 10 bis 50 ppm, bezogen auf die Summe der Komponenten a) und b) eingesetzt.

Die Herstellung der erfindungsgemäßen vernetzbaren hyperverzweigten Polymeren erfolgt bevorzugt dadurch, dass man entweder die Komponenten a) und b1) oder b2) gegebenenfalls stufenweise mit dem Katalysator (einer die Hydrosilylierung katalysierenden Verbindung) zusammengibt und zum Polymeren umsetzt, was ein weiterer Gegenstand der Erfindung ist.

In einer bevorzugten Ausführungsvariante wird erst die Komponente a) mit dem Katalysator zusammengegeben und anschließend die Komponenten b) zugegeben. Die Umsetzung zum Polymer kann dabei bei Temperaturen von 0 bis 150°C, vorzugsweise bei Temperaturen von 20 bis 100°C durchgeführt werden.

Vorzugsweise wird die Reaktion in Anwesenheit von Lösungsmittel wie z.B. Alkoholen wie Methanol, Ethanol, n-Propanol, iso-Propanol und Butanol, Ketonen wie Aceton und Butanon, Ethern wie Diethylether, Methyl-tert.-butylether und Tetrahydrofuran, Estern wie Butylacetat und Methoxypropylacetat, aromatischen Lösemitteln wie Toluol und Xylol, und aliphatische Lösemittel wie Hexan, Lackbenzin durchgeführt. Vorzugsweise werden Lösungsmittel in einer Menge von 0 bis 80 Gew.-%, besonders bevorzugt 20 bis 70 Gew.-%, bezogen auf die Summe der Komponenten a) und b) bzw. c) und d) eingesetzt.

Gegenstand der Erfindung ist schließlich die Verwendung von vernetzbaren, hyperverzweigten Polymeren zur Beschichtung von metallischen, mineralischen und Kunststoffoberflächen, zur Modifizierung von Kunststoffen und Herstellung von Formteilen.

Die vernetzbaren, hyperverzweigten Polymeren können zur Beschichtung von metallischen, mineralischen und Kunststoffoberflächen, zur Modifizierung von Kunststoffen und Herstellung von Formteilen verwendet werden.

Folgende Beispiele sollen die Herstellung und Verwendung der erfindungsgemäßen vernetzbaren, hyperverzweigten Polymeren illustrieren, ohne dabei auf diese beschränkt zu sein.

### Beispiele

**Silopren U:** Hydrosilylierungskatalysator Silopren U Katalysator Pt/S (68 %ige Lösung eines mit 1,3,5,7-Tetramethyl-1,3,5,7-tetravinyl-cyclotetrasiloxan-Liganden substituierten Pt-Komplexes in Isopropanol), erhältlich bei der Bayer AG, D-51368 Leverkusen.

### Beispiel 1

### Synthese eines Gemisches aus Tris(dimethylsiloxy)vinylsilan und Bis(dimethylsiloxy)ethoxyvinylsilan

In einen Kolben ausgerüstet mit Rührer, Thermometer, Rückflusskühler und Tropftrichter wurden 2412 g (18 mol) 1,1,3,3-Tetramethyldisiloxan, 243 g (13,5 mol) Wasser und 10,5 g 37 %ige wässrige Salzsäure vorgelegt. 888,6 g (6 mol) Vinyltrimethoxysilan wurden unter Rühren innerhalb von 1 Stunde zudosiert. Durch die freiwerdende Reaktionswärme heizte sich der Kolbeninhalt auf 50°C auf. Nach beendeter Zugabe wurde eine Stunde nachgerührt. Das Reaktionsgemisch wurde in ein Trenngefäß überführt, die untere Wasser/Alkohol-Phase abgetrennt und verworfen, die obere Siloxanphase zweimal mit je 250 ml Wasser gewaschen und anschließend über wasserfreiem Natriumsulfat getrocknet. Nach Filtration wurde das Filtrat nach Zusatz von 1 % Di-tert.-butylphenol über eine verspiegelte Füllkörperkolonne in Vakuum bei 200 mbar fraktioniert destilliert. Bei 120 bis 122°C Kopftemperatur wurden bis maximal 200°C Sumpftemperatur 740 g Hauptlauf bestehend aus 91 % Tris(dimethylsiloxy)vinylsilan und 5 % Bis(dimethylsiloxy)ethoxyvinylsilan abgetrennt (64 % Ausbeute bezogen auf das eingesetzte Vinylsilan).

### Beispiel 2

### Synthese eines hyperverzweigten Polymers mit Si(OEt)₃-Endgruppen

Zu einer Mischung von 15 g (0,05 mol) des Produktes aus Beispiel 1 und 15 g Tetrahydrofuran wurden unter Argonatmosphäre bei Raumtemperatur 0,08 ml Silopren U Katalysator Pt/S gegeben. Die Mischung erwärmte sich innerhalb von 10 Minuten ohne äußere Wärmezufuhr auf 48°C. Zur Mischung wurden innerhalb von 40 Minuten weitere 285 g (1,02 mol) Tris(dimethylsiloxy)vinylsilan in 285 g Tetrahydrofuran getropft, wobei die Temperatur der Reaktionsmischung bis auf etwa 67°C anstieg. Nach dem Absinken der Temperatur auf 20°C wurde 2 h unter Rückfluss erhitzt. Nach Zugabe von weiteren 0,07 ml des Katalysators 509 g (2,68 mol) Vinyltriethoxysilan zugetropft und weitere 2 h unter Rückfluss erhitzt. Anschließend wurden bis zu einem Vakuum von 0,1 mbar alle flüchtigen Bestandteile abkondensiert. Nach Zugabe von 10 g Kieselgur wurde 1 h gerührt und filtriert. Man erhielt 638 g klares Öl mit einem Molekulargewicht von 3042 g/mol (Mn) bzw. 10410 g/mol (Mw).

### Beispiel 3

### Synthese eines hyperverzweigten Polymers mit Si(OEt)₃-Endgruppen

Unter Argonatmosphäre wurden zu 10 g (0,036 mmol) des Produktes aus Beispiel 1 und 0,02 ml Silopren U zugesetzt und nach Abkühlung der Reaktionsmischung weitere 30 g (0,107 mol) Tris(dimethylsiloxy)vinylsilan so schnell zugetropft, dass die Temperatur der Mischung stets zwischen 60 und 75°C lag. Anschließend wurde 1 h bei 80°C gerührt, bei 60°C weitere 0,005 ml des Katalysators zugegeben und 68 g (0,358 mol) Vinyltriethoxysilan zugetropft, wobei die Temperatur bis auf 86°C anstieg. Nach der Zugabe wurde noch 1 h auf 80°C erhitzt und danach bei dieser Temperatur alle flüchtigen Bestandteile bis zu einem Vakuum von 0,1 mbar abkondensiert. Der Rückstand wurde mit 3 g Kieselgur versetzt, 1 h bei Raumtemperatur gerührt und filtriert. Man erhielt 86 g klares Öl mit einem Molekulargewicht von 5482 g/mol (Mn) bzw. 28914 g/mol (Mw).

### Beispiel 4

### Herstellung von Beschichtungen

Die Beschichtungen wurden mittels eines Filmziehrahmens (Rakel) appliziert. Die Bestimmung der Bleistifthhärte erfolgte in Anlehnung an ASTM D 3363-92a mit Bleistiften der Marke "Stabilo-micro 8000" von der Firma Schwan, Deutschland, Härte B bis 7H. Angegeben ist der Härtegrad des Bleistifts, welcher den Film nicht bis zum Untergrund ritzt. Die Lösemittelbeständigkeit wurde nach 5 Minuten Einwirkzeit visuell überprüft. "Sehr gute Lösemittelbeständigkeit" bedeutet, dass die Beschichtung anschließend keine Veränderung aufwies.

Eine Lösung von 1 g Polymer aus Beispiel 3 in 2,3 g Ethanol und 1 g n-Butanol wurden mit 0,2 g 0,1 normaler p-Toluolsulfonsäure versetzt und die Mischung 1,5 h bei Raumtemperatur gerührt. Anschließend wurde eine Glasplatte mit einer Nassfilmdicke von 60 µm beschichtet und bei Raumtemperatur gehärtet. Man erhielt einen transparenten, rissfreien Film mit einer Lösemittelbeständigkeit gegen Aceton mit Beurteilung "sehr gut" und einer Bleistifthärte von 7H.

### Beispiel 5

### Herstellung von Beschichtungen

Die Beschichtungen wurden wie in Beispiel 4 beschrieben hergestellt. 28,6 g Tetraethoxysilan in 35 g n-Butanol wurden unter Rühren mit 4,8 g 0,1 normaler p-Toluolsulfonsäure versetzt und die Mischung 24 h gerührt. Anschließend wurde 1 g der Mischung mit 1,57 g n-Butanol, 0,43 g hyperverzweigtem Polymer aus Beispiel 3 und 0,15 g 0,1 normaler p-Toluolsulfonsäure versetzt und 1,5 h gerührt.

Anschließend wurden 2 Glasplatten mit jeweils 60 µm Nassfilmdicke beschichtet, wobei die eine Beschichtung 2 d bei Raumtemperatur, die andere nach 15 Minuten Ablüftzeit 2 h bei 150°C gehärtet wurde. Man erhielt transparente, rissfreie Filme mit einer Lösemittelbeständigkeit gegen Aceton mit Beurteilung "sehr gut" und einer Bleistifthärte von 7H.

## Patentansprüche

1. Vemetzbare hyperverzweigte Polymere, erhältlich durch Umsetzung von
a) mindestens einer Verbindung, die als funktionelle Gruppen
Aₘ und Bₙ enthält,
wobei
A ein H-Si(R¹) 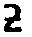 -haltiger Rest
in welchem
R¹ Kohlenwasserstoffrest mit 1 bis 8 Kohlenstoffatomen,
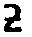 = 3-v ist,
B ein -CR'=CHR Gruppen oder eine Kohlenstoff-Kohlenstoff-Dreifachbindung enthaltender Si(R¹)_{y}-Rest mit
y = 3-v,
R, R' Wasserstoff oder einen 1 bis 15 Kohlenstoffatome enthaltenden Kohlenwasserstoffrest und
m + n kleiner gleich 7 und
n, m eine ganze Zahl von 1 bis 6 und im Mittel 1,5 bis 6,
mit der Maßgabe,
dass immer einer der Indizes m oder n gleich 1 ist und der andere Index größer gleich 2 ist
mit
b1) im Fall von m = 1
mindestens einer Verbindung der allgemeinen Formel
AXᵥ,
in der
A ein H-Si-(R¹)_{z}-haltiger Rest,
in welchem
R¹ Kohlenwasserstoffrest mit 1 bis 8 Kohlenstoffatomen,
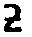 = 3-v,
X eine an Silizium gebundene hydrolysierbare Gruppe oder eine Si-OH-Gruppe und
v eine ganze Zahl von 1 bis 3 bedeuten,
oder
b2) im Fall von n=1
mindestens einer Verbindung der Formel
BX_{w},
mit
B = ein -CR'=CHR-Gruppen oder Kohlenstoff-Kohlenstoff Dreifachbindungen enthaltender Si(R¹)_{y}-Rest, mit
R¹ Kohlenwasserstoffrest mit 1 bis 8 Kohlenwasserstoffatomen,
y = 3-v,
R, R' Wasserstoff oder einen 1 bis 15 Kohlenstoffatome enthaltenden Kohlenwasserstoffrest und
X eine an Silizium gebundene hydrolysierbare Gruppe oder eine Si-OH-Gruppe und
w eine ganze Zahl von 1 bis 6,
bei Temperaturen größer gleich 0°C, gegebenenfalls in Gegenwart eines Katalysators.

2. Vernetzbares, hyperverzweigtes Polymer nach Anspruch 1, **dadurch gekennzeichnet, dass** das Polymer ein Molekulargewicht (Mn) von 1 000 bis 5 000 000 aufweist.

3. Vernetzbares, hyperverzweigtes Polymer nach Anspruch 1 oder 2, **dadurch gekennzeichnet, dass** die Verbindung a) mindestens eine Verbindung der Formel (I)
H-SiR¹ ₐ[(Oₓ -(CH₂)_{b} R'C=CH-R]_{c} (I)
ist,
wobei
R¹ Kohlenwasserstoffrest mit 1 bis 8 Kohlenstoffatomen,
R, R' Wasserstoff oder einen 1 bis 15 Kohlenstoffatome enthaltenden Kohlenwasserstoffrest und
a 0 oder 1,
b eine ganze Zahl von 1 bis 6 und
c = 3-a und
x 0 oder 1 ist.

4. Vernetzbares, hyperverzweigtes Polymer nach Anspruch 1, **dadurch gekennzeichnet, dass** die Verbindung a) mindestens eine Verbindung der Formel (II)
H-SiR¹ ₐ[(Oₓ -(CH₂)_{b} C≡C-R]_{c} (II)
ist,
in der
R Wasserstoff oder einen 1 bis 15 Kohlenstoffatome enthaltenden Kohlenwasserstoffrest ,
R¹ Kohlenwasserstoffrest mit 1 bis 8 Kohlenstoffatomen,
a 0 oder 1,
b eine ganze Zahl von 1 bis 6 und
c = 3-a und
x 0 oder 1 ist.

5. Vemetzbares, hyperverzweigtes Polymer nach einem oder mehreren der Ansprüche 1 bis 4, **dadurch gekennzeichnet, dass** im Fall von m = 1 AXᵥ mindestens eine Verbindung der Formel (III)
H-SiR¹ _{d}Yₑ (III)
ist,
in der
R¹ Kohlenwasserstoffrest mit 1 bis 8 Kohlenstoffatomen,
d eine ganze Zahl von 0 bis 2,
Y Cl, Br oder OR², mit
R² eine Alkyl- oder Acylgruppe mit 1 bis 8 Kohlenstoffatomen,
und
e = 3-d ist.

6. Vernetzbares, hyperverzweigtes Polymer nach einem oder mehreren der Ansprüche 1 bis 5, **dadurch gekennzeichnet, dass** im Fall von n = 1 die Verbindung BX_{w} eine Verbindung der allgemeinen Formel (IV),
R³-SiR¹ _{d}Yₑ (IV)
in der
R¹ Kohlenwasserstoffrest mit 1 bis 8 Kohlenstoffatomen,
R³ eine -CR'=CH-R-Gruppe oder eine Kohlenstoff-Kohlenstoff-Dreifachbindung enthaltende Gruppe und
d eine ganze Zahl von 0 bis 2,
Y Cl, Br oder OR², mit
R² eine Alkyl- oder Acylgruppe mit 1 bis 8 Kohlenstoffatomen und
e = 3-d ist.

7. Vemetzbares, hyperverzweigtes Polymer nach einem oder mehreren der Ansprüche 1 bis 5, **dadurch gekennzeichnet, dass** im Fall von n = 1 die Verbindung a)
R³-SiR¹ _{f}(O-SiHR⁴ ₂)_{3-f}
R³-SiR¹ _{f}(O-SiH₂R⁴)_{3-f}
und/oder
R³-SiR¹ _{f}H_{3-f}
ist,
wobei
R³ eine -CR'=CH-R-Gruppe oder eine Kohlenstoff-Kohlenstoff-Dreifachbindung enthaltende Gruppe,
R¹ Kohlenwasserstoffrest mit 1 bis 8 Kohlenstoffatomen,
f eine ganze Zahl von 0 bis 2 und
R⁴ eine C₁-C₈-Alkyl oder Phenyl bedeuten.

8. Verfahren zur Herstellung von vernetzbaren, hyperverzweigten Polymeren nach einem oder mehreren der Ansprüche 1 bis 7, **dadurch gekennzeichnet, dass** man die Komponenten a) und b1) oder b2) gegebenenfalls stufenweise mit einer die Hydrosilylierung katalysierenden Verbindung zusammengibt und zum Polymeren umsetzt.

9. Verwendung von vernetzbaren, hyperverzweigten Polymeren nach einem oder mehreren der Ansprüche 1 bis 7 zur Beschichtung von metallischen, mineralischen und Kunststoffoberflächen, zur Modifizierung von Kunststoffen und Herstellung von Formteilen.

## Claims

1. Crosslinkable hyperbranched polymers, obtainable by reaction of
a) at least one compound which contains as functional groups
Aₘ and Bₙ,
wherein
A is an H-Si(R¹)_{z}-containing radical
in which
R¹ is a hydrocarbon radical with 1 to 8 carbon atoms,
z = 3-v,
B is an Si(R¹)*y* radical containing -CR'=CHR groups or a carbon-carbon triple bond, where
y = 3-v,
R, R' are hydrogen or a hydrocarbon radical containing 1 to 15 carbon atoms and
m + n is less than or equal to 7 and
n, m = a whole number from 1 to 6 and on average 1.5 to 6,
provided that
one of the indices m or n is always equal to 1 and the other index is greater than or equal to 2
with
b1) where m = 1
at least one compound of the general formula
AXᵥ,
in which
A is an H-Si-(R¹)_{z}-containing radical
in which
R¹ is a hydrocarbon radical with 1 to 8 carbon atoms
z = 3-v,
X is a silicon-bonded hydrolysable group or an Si-OH group and
v is a whole number from 1 to 3,
or
b2) where n = 1
at least one compound of the formula
BX_{w}
where
B is an Si(R¹)*y* radical containing -CR'=CHR groups or a carbon-carbon triple bond, where
R¹ is a hydrocarbon radical with 1 to 8 carbon atoms,
y = 3-v,
R, R' are hydrogen or a hydrocarbon radical containing 1 to 15 carbon atoms and
X is a silicon-bonded hydrolysable group or an Si-OH group and
w is a whole number from 1 to 6,
at temperatures greater than or equal to 0°C, optionally in the presence of a catalyst.

2. Crosslinkable hyperbranched polymer according to Claim 1, **characterised in that** the polymer has a molecular weight (Mn) from 1,000 to 5,000,000.

3. Crosslinkable hyperbranched polymer according to Claim 1 or 2, **characterised in that** the compound a) is at least one compound of the formula (I)
H-SiR¹ ₐ[(Oₓ-(CH₂)_{b} R'C=CH-R]_{c} (I)
wherein
R¹ is a hydrocarbon radical with 1 to 8 carbon atoms,
R, R' are hydrogen or a hydrocarbon radical containing 1 to 15 carbon atoms and
a = 0 or 1,
b = a whole number from 1 to 6 and
c = 3-a and
x = 0 or 1.

4. Crosslinkable hyperbranched polymer according to Claim 1, **characterised in that** the compound a) is at least one compound of the formula (II)
H-SiR¹ ₐ[(Oₓ-(CH₂)_{b} C≡C-R]_{c} (II),
in which
R is hydrogen or a hydrocarbon radical containing 1 to 15 carbon atoms,
R ¹ is a hydrocarbon radical with 1 to 8 carbon atoms,
a = 0 or 1,
b = a whole number from 1 to 6 and
c = 3-a and
x= 0 or 1.

5. Crosslinkable hyperbranched polymer according to one or more of Claims 1 to 4, **characterised in that** where m = 1, AXᵥ is at least one compound of the formula (III)
H-SiR¹ _{d}Yₑ (III),
in which
R¹ is a hydrocarbon radical with 1 to 8 carbon atoms,
d is a whole number from 0 to 2,
Y is Cl, Br or OR², where
R² is an alkyl or acyl group with 1 to 8 carbon atoms, and
e = 3-d.

6. Crosslinkable hyperbranched polymer according to one or more of Claims 1 to 5, **characterised in that** where n = 1 the compound BX_{w} is a compound of the general formula (IV)
R³-SiR¹ _{d}Yₑ (IV)
in which
R¹ is a hydrocarbon radical with 1 to 8 carbon atoms,
R³ is a -CR'=CH-R group or a group containing a carbon-carbon triple bond and
d is a whole number from 0 to 2,
Y is Cl, Br or OR², where
R² is an alkyl or acyl group with 1 to 8 carbon atoms and
e = 3-d.

7. Crosslinkable hyperbranched polymer according to one or more of Claims 1 to 5, **characterised in that** where n = 1 the compound a) is
R³-SiR¹ _{f}(O-SiHR⁴ ₂)_{3-f}
R³-SiR¹ _{f}(O-SiH₂R⁴)_{3-f}
and/or
R³-SiR¹ _{f}H_{3-f}
wherein
R³ is a -CR'=CH-R group or a group containing a carbon-carbon triple bond,
R¹ is a hydrocarbon radical with 1 to 8 carbon atoms,
f is a whole number from 0 to 2 and
R⁴ is a C₁-C₈-alkyl or phenyl.

8. Process for the production of crosslinkable hyperbranched polymers according to one or more of Claims 1 to 7, **characterised in that** the components a) and b1) or b2) are combined optionally stepwise with a compound catalysing the hydrosilylation and converted to the polymer.

9. Use of crosslinkable hyperbranched polymers according to one or more of Claims 1 to 7 for coating metal, mineral and plastics surfaces, modifying plastics and producing mouldings.

## Revendications

1. Polymères hyperramifiés réticulables obtenus par réaction de
a) au moins un composé contenant des groupes fonctionnels
Aₘ et Bₙ, pour lesquels
A représente un groupe contenant le motif H-Si(R¹)_{z} pour lequel
R¹ représente un radical hydrocarboné en C₁-C₈,
z = 3 - v,
B représente un motif Si(R¹)_{y} contenant des groupes -CR'=CHR ou une triple liaison carbone-carbone,
y=3-v,
R, R' représentent chacun l'hydrogène ou un radical hydrocarboné en C₁-C₁₅ et
la somme m + n est inférieure à 7 et
n et m sont des nombres entiers allant de 1 à 6 et en moyenne de 1,5 à 6,
sous réserve que,
l'un des indices m ou n est toujours égal à 1 et l'autre est supérieur à 2,
avec
b1) dans le cas où m = 1
au moins un composé de formule générale
AXᵥ,
dans laquelle
A représente un groupe contenant un motif H-Si(R¹)_{z},
pour lequel
R¹ représente un radical hydrocarboné en C₁-C₈,
z = 3 - v,
X représente un groupe hydrolysable fixé sur le silicium ou un groupe Si-OH et
v est un nombre entier allant de 1 à 3,
ou bien
b2) dans le cas où n = 1
au moins un composé de formule
BX_{w},
dans laquelle
B représente un motif Si(R¹)_{y} contenant des groupes -CR'=CHR ou des triples liaisons carbone-carbone,
R¹ représente un radical hydrocarboné en C₁ à C₈,
y = 3 - v,
R, R' représentent chacun l'hydrogène ou un radical hydrocarboné en C₁ à C₁₅ et
X représente un groupe hydrolysable fixé sur le silicium ou un groupe Si-OH et
w est un nombre entier allant de 1 à 6,
à des températures supérieures à 0°C, le cas échéant en présence d'un catalyseur.

2. Polymère hyperramifié réticulable selon la revendication 1, **caractérisé en ce que** son poids moléculaire (Mn) va de 1 000 à 5 000 000.

3. Polymère hyperramifié réticulable selon la revendication 1 ou 2, **caractérisé en ce que** le composé a) consiste en au moins un composé de formule (I)
H-SiR¹ ₐ[(Oₓ-(CH₂)_{b}R'C=CH-R]_{c} (I),
dans laquelle
R¹ représente un radical hydrocarboné en C₁-C₈,
R, R' représentent chacun l'hydrogène ou un radical hydrocarboné en C₁-C₁₅,
a est égal à 0 ou 1,
b est un nombre entier allant de 1 à 6,
c=3 - a et
x est égal à 0 ou 1.

4. Polymère hyperramifié réticulable selon la revendication 1, **caractérisé en ce que** le composé a) consiste en au moins un composé de formule (II)
H-SiR¹ ₐ[(Oₓ-(CH₂)_{b}C≡C-R]_{c} (II),
dans laquelle
R représente l'hydrogène ou un radical hydrocarboné en C₁ à C₁₅,
R¹ représente un radical hydrocarboné en C₁ à C₈,
a est égal à 0 ou 1,
b est un nombre entier allant de 1 à 6,
c = 3 - a et
x est égal à 0 ou 1.

5. Polymère hyperramifié réticulable selon une ou plusieurs des revendications 1 à 4, **caractérisé en ce que** lorsque m = 1, AX_{y} consiste en au moins un composé de formule (III)
H-SiR¹ _{d}Yₑ (III),
dans laquelle
R¹ représente un radical hydrocarboné en C₁-C₈,
d est un nombre entier allant de 0 à 2,
Y représente CI, Br ou OR²,
R² représentant un groupe alkyle ou acyle en C₁-C₈, et
e = 3 - d.

6. Polymère hyperramifié réticulable selon une ou plusieurs des revendications 1 à 5, **caractérisé en ce que**, lorsque n = 1, le composé BX_{w} est un composé de formule générale (IV)
R³-SiR¹ _{d}Yₑ (IV)
dans laquelle
R¹ représente un radical hydrocarboné en C₁-C₈,
R³ représente un groupe contenant un groupe -CR'=CH-R ou une triple liaison carbone-carbone,
d est un nombre entier allant de 0 à 2,
Y représente CI, Br ou OR²,
R² représentant un groupe alkyle ou acyle en C₁-C₈ et
e = 3 - d.

7. Polymère hyperramifié réticulable selon une ou plusieurs des revendications 1 à 5, **caractérisé en ce que**, lorsque n = 1, le composé a) consiste en
R³-SiR¹ _{f}(O-SiHR⁴ ₂)_{3-f}
R³-SiR¹ _{f}(O-SiH₂R⁴)_{3-f}
et/ou
R³-SiR¹ _{f}H_{3-f}
pour lesquels
R³ représente un groupe contenant un groupe -CR'=CH-R ou une triple liaison carbone-carbone,
R¹ représente un radical hydrocarboné en C₁-C₈,
f est un nombre entier allant de 0 à 2 et
R⁴ représente un groupe alkyle en C₁-C₈ ou phényle.

8. Procédé pour la préparation de polymères hyperramifiés réticulables selon une ou plusieurs des revendications 1 à 7, **caractérisé en ce que** l'on combine les composants a) et b1) ou b2), le cas échéant par portions, avec un composé catalysant l'hydrosilylation et on convertit en le polymère.

9. Utilisation des polymères hyperramifiés réticulables selon une ou plusieurs des revendications 1 à 7 pour le revêtement de surfaces métalliques, minérales ou de résines synthétiques, pour la modification de résines synthétiques et pour la fabrication de pièces moulées.
